# EUROPÄISCHE PATENTSCHRIFT

(11) **EP 3 224 811 B1**
(45) Veröffentlichungstag und Bekanntmachung des Hinweises auf die Patenterteilung: **11.11.2020**
(21) Anmeldenummer: 15774901.1
(22) Anmeldetag: 29.09.2015
(51) Int. Cl.: B60R 25/20, G07C 9/00, H04W 12/08, H04W 12/04

(54) **VERFAHREN ZUM STEUERN EINES ZUGRIFFS AUF EIN FAHRZEUG**
METHOD FOR CONTROLLING ACCESS TO A VEHICLE
PROCÉDÉ DE COMMANDE D'UN ACCÈS À UN VÉHICULE

(30) Priorität: 26.11.2014 DE 102014224080
(43) Veröffentlichungstag der Anmeldung: 04.10.2017
(73) Patentinhaber: Robert Bosch GmbH, 70442 Stuttgart (DE)
(72) Erfinder: NORDBRUCH, Stefan, 70806 Kornwestheim (DE)
(86) Internationale Anmeldenummer: PCT/EP2015/072419
(87) Internationale Veröffentlichungsnummer: WO 2016/082994

(56) Entgegenhaltungen:
- DE-A1- 19 753 401
- DE-A1- 19 753 401
- DE-A1-102011 107 998
- DE-A1-102011 107 998
- DE-A1-102012 222 562
- DE-A1-102013 002 281
- DE-A1-102013 002 281
- DE-U1- 20 003 088
- DE-U1- 20 003 088

## Beschreibung

Die Erfindung betrifft ein Verfahren zum Steuern eines Zugriffs auf ein Fahrzeug. Die Erfindung betrifft ferner ein System zum Steuern eines Zugriffs auf ein Fahrzeug. Die Erfindung betrifft des Weiteren ein Parksystem für Fahrzeuge sowie ein Zugriffskontrollsystem zum Steuern eines Zugriffs auf ein Fahrzeug. Des Weiteren betrifft die Erfindung ein Fahrzeug, einen Teilnehmer für ein Kommunikationsnetzwerk, ein Verfahren zum Betreiben eines Teilnehmers für ein Kommunikationsnetzwerk sowie ein Computerprogramm.

### Stand der Technik

Die Offenlegungsschrift DE 10 2013 002 281 A1 zeigt ein Kraftfahrzeug für ein Carsharing-System.

Die Gebrauchsmusterschrift DE 200 03 088 U1 zeigt einen Parkautomaten, der eine Überwachung von kostenpflichtigen Fahrzeugparkplätzen ermöglicht.

Die Offenlegungsschrift DE 10 2012 222 562 A1 zeigt ein System für bewirtschaftete Parkflächen zur Überführung eines Fahrzeugs von einer Startposition in eine Zielposition.

Bei einem vollautomatisierten (autonomen) sogenannten Valet Parking wird ein Fahrzeug von seinem Fahrer auf einer Abgabestelle, zum Beispiel vor einem Parkhaus geparkt und von da fährt das Fahrzeug selber in eine Parkposition / Parkbucht und wieder zurück zur Abgabestelle.

Für das autonome Valet Parking ist es in der Regel erforderlich, dass ein Betreiber eines Parkplatzes Zugriff auf das Fahrzeug hat, um es von einer Abgabeposition zur Parkposition zu führen oder dem Fahrzeug ein entsprechendes Startsignal zu geben, damit das Fahrzeug autonom zur Parkposition fährt. Analog gilt dies für eine Rückfahrt des Fahrzeugs von der Parkposition zu der Abgabeposition.

Üblicherweise werden analog zu physikalischen Schlüsseln elektronische oder virtuelle Schlüssel verwendet, um einen entfernten Zugriff auf das Fahrzeug zu bekommen. Ähnlich wie bei physikalischen Schlüsseln muss auch bei virtuellen oder elektronischen Schlüsseln sichergestellt werden, dass diese nicht für einen unbefugten Zugriff missbraucht werden.

### Offenbarung der Erfindung

Die der Erfindung zugrunde liegende Aufgabe kann daher darin gesehen werden, ein effizientes Konzept bereitzustellen, mittels welchem ein unbefugter Zugriff auf ein Fahrzeug mittels eines elektronischen Schlüssels verhindert werden kann.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt wird ein Verfahren zum Steuern eines Zugriffs auf ein Fahrzeug bereitgestellt, wobei ein elektronischer Schlüssel für einen Zugriff auf eine oder mehrere Fahrzeugkomponenten nach einem Abstellen des Fahrzeugs zum Parken des Fahrzeugs in einer Parkposition deaktiviert wird, so dass ein mittels des deaktivierten elektronischen Schlüssels versuchter Zugriff auf die eine oder die mehreren Fahrzeugkomponenten des in der Parkposition geparkten Fahrzeugs verhindert werden kann.

Gemäß einem weiteren Aspekt wird ein System zum Steuern eines Zugriffs auf ein Fahrzeug bereitgestellt, umfassend einen Schlüsselverwaltungsserver, der ausgebildet ist, einen elektronischen Schlüssel für einen Zugriff auf eine oder mehrere Fahrzeugkomponenten nach einem Abstellen des Fahrzeugs zum Parken des Fahrzeugs in einer Parkposition zu deaktivieren, so dass ein mittels des deaktivierten elektronischen Schlüssels versuchter Zugriff auf die eine oder die mehreren Fahrzeugkomponenten des geparkten Fahrzeugs verhindert werden kann.

Gemäß einem weiteren Aspekt wird ein Parksystem für Fahrzeuge bereitgestellt, umfassend einen Parkplatz und das System zum Steuern eines Zugriffs auf ein Fahrzeug.

Gemäß einem weiteren Aspekt wird ein Zugriffskontrollsystem zum Steuern eines Zugriffs auf ein Fahrzeug bereitgestellt, umfassend eine Kommunikationsschnittstelle, die ausgebildet ist, ein Deaktivierungssignal zum Deaktivieren respektive ein Aktivierungssignal zum Aktivieren eines elektronischen Schlüssels für einen Zugriff auf eine oder mehrere Fahrzeugkomponenten nach einem Abstellen des Fahrzeugs zum Parken des Fahrzeugs in einer Parkposition über ein Kommunikationsnetzwerk zu empfangen, so dass das Zugriffskontrollsystem Wissen darüber aufweisen kann, dass der elektronische Schlüssel keinen Zugriff mehr respektive einen Zugriff auf die eine oder die mehreren Fahrzeugkomponenten hat, wobei das Zugriffskontrollsystem ferner ausgebildet ist, einen mittels eines aktivierten elektronischen Schlüssels geführten Zugriff auf die eine oder die mehreren Fahrzeugkomponenten zu erlauben und einen mittels eines deaktivierten elektronischen Schlüssels geführten Zugriff zu verhindern.

Gemäß einem weiteren Aspekt wird ein Fahrzeug bereitgestellt, umfassend das Zugriffskontrollsystem zum Steuern eines Zugriffs auf ein Fahrzeug.

Nach noch einem Aspekt wird ein Teilnehmer für ein Kommunikationsnetzwerk bereitgestellt, umfassend einen Prozessor, der ausgebildet ist, ein Deaktivierungssignal respektive Aktivierungssignal für ein Zugriffskontrollsystem eines Fahrzeugs zum Steuern des Zugriffs auf eine oder mehrere Fahrzeugkomponenten zu ermitteln, und eine Kommunikationsschnittstelle, die ausgebildet ist, das Deaktivierungssignal respektive Aktivierungssignal an das Zugriffskontrollsystem über ein Kommunikationsnetzwerk zu senden, so dass das Zugriffskontrollsystem Wissen darüber aufweisen kann, dass der elektronische Schlüssel keinen Zugriff mehr respektive einen Zugriff auf die eine oder die mehreren Fahrzeugkomponenten hat.

Gemäß einem weiteren Aspekt wird ein Verfahren zum Betreiben eines Teilnehmers für ein Kommunikationsnetzwerk bereitgestellt, wobei der Teilnehmer ein Deaktivierungssignal respektive Aktivierungssignal für ein Zugriffskontrollsystem eines Fahrzeugs zum Steuern des Zugriffs auf eine oder mehrere Fahrzeugkomponenten ermittelt und das Deaktivierungssignal respektive Aktivierungssignal an das Zugriffskontrollsystem über ein Kommunikationsnetzwerk sendet, so dass das Zugriffskontrollsystem Wissen darüber aufweisen kann, dass der elektronische Schlüssel keinen Zugriff mehr respektive einen Zugriff auf die eine oder die mehreren Fahrzeugkomponenten hat.

Nach noch einem Aspekt wird ein Computerprogramm bereitgestellt, welches Programmcode zur Durchführung des Verfahrens zum Steuern eines Zugriffs auf ein Fahrzeug und/oder eines Verfahrens zum Betreiben eines Teilnehmers für ein Kommunikationsnetzwerk, wenn das Computerprogramm auf einem Computer ausgeführt wird.

Die Erfindung umfasst also insbesondere den Gedanken, einen elektronischen oder virtuellen Schlüssel, mittels welchem auf eine oder mehrere Fahrzeugkomponenten zugegriffen werden kann, nach einem Abstellen des Fahrzeugs zu deaktivieren. Das heißt also, dass, nachdem das Fahrzeug abgestellt ist, der elektronische Schlüssel nicht mehr für einen Zugriff auf die eine oder die mehreren Fahrzeugkomponenten verwendet werden kann. Denn er ist deaktiviert worden, also insbesondere ungültig gemacht worden. Dem elektronischen Schlüssel sind somit vorzugsweise in vorteilhafter Weise Berechtigungen und/oder Zugriffsrechte entzogen worden. Dadurch kann in vorteilhafter Weise verhindert werden, dass nach dem Abstellen, also während das Fahrzeug in der Parkposition parkt, der elektronische Schlüssel für einen Zugriff auf die eine oder die mehreren Fahrzeugkomponenten verwendet werden kann. Somit kann also während der Parkzeitdauer kein unbefugter Zugriff mittels des elektronischen Schlüssels mehr auf das Fahrzeug durchgeführt werden. So kann beispielsweise der elektronische Schlüssel nicht mehr verwendet werden, um das Fahrzeug zu öffnen und/oder zu starten. Nicht erlaubte, also zum Beispiel gesetzeswidrige, Fahrten, zum Beispiel durch ein Personal oder durch Dritte, sowie Diebstähle aus dem Fahrzeug oder ein Diebstahl des Fahrzeugs können somit in vorteilhafter Weise verhindert werden.

Nach einer Ausführungsform umfasst das Kommunikationsnetzwerk ein WLAN-Netzwerk und/oder ein Mobilfunknetzwerk.

In einer Ausführungsform wird respektive ist eine Kommunikation über das Kommunikationsnetzwerk verschlüsselt.

Ein Parkplatz im Sinne der vorliegenden Erfindung kann auch als eine Parkfläche bezeichnet werden und dient als Abstellfläche für Fahrzeuge. Der Parkplatz bildet somit insbesondere eine zusammenhängende Fläche, die mehrere Stellplätze (bei einem Parkplatz auf privatem Grund) oder Parkstände (bei einem Parkplatz auf öffentlichem Grund) aufweist. Der Parkplatz kann nach einer Ausführungsform von einem Parkhaus umfasst sein. Insbesondere ist der Parkplatz von einer Garage umfasst.

Autonom im Sinne der vorliegenden Erfindung bedeutet insbesondere, dass das Fahrzeug selbstständig, also ohne einen Eingriff eines Fahrers, auf dem Parkplatz navigiert oder fährt oder geführt wird. Das Fahrzeug fährt also selbstständig auf dem Parkplatz, ohne dass ein Fahrer hierfür das Fahrzeug steuern müsste. Ein Führen umfasst insbesondere eine Quer- und/oder eine Längsführung des Fahrzeugs. Ein solch autonomes fahrendes Fahrzeug, das automatisch ein- und ausparken kann, wird beispielsweise als ein AVP-Fahrzeug bezeichnet. AVP steht für "automatic valet parking" und kann mit "automatischer Parkvorgang" übersetzt werden. Fahrzeuge, die diese AVP-Funktionalität nicht aufweisen, werden beispielsweise als normale Fahrzeuge bezeichnet.

Das Fahrzeug wird nach einer Ausführungsform ferngesteuert geführt. Das heißt, dass eine fahrzeugexterne Fernsteuerungseinrichtung vorgesehen ist, die das Fahrzeug führt, also für das Fernsteuern entsprechend ausgebildet ist.

Eine Abgabeposition (auch Abgabestelle genannt) im Sinne der vorliegenden Erfindung, ist eine Position, an welcher ein Fahrer des Fahrzeugs sein Fahrzeug für einen autonomen Parkvorgang abstellen kann und von dieser sein Fahrzeug zu einem späteren Zeitpunkt wieder abholen kann.

Eine Parkposition im Sinne der vorliegenden Erfindung ist eine Position, an welcher das Fahrzeug autonom parken soll.

In einer Ausführungsform ist vorgesehen, dass das Fahrzeug autonom von der Abgabeposition zu der Parkposition navigiert oder fährt oder ferngesteuert geführt wird.

In einer weiteren Ausführungsform ist vorgesehen, dass das Fahrzeug autonom in die Parkposition einparkt oder ferngesteuert einparkt.

In einer anderen Ausführungsform ist vorgesehen, dass das Fahrzeug autonom aus der Parkposition ausparkt oder ferngesteuert ausparkt.

Nach einer weiteren Ausführungsform ist vorgesehen, dass das Fahrzeug autonom von der Parkposition zu der Abgabeposition navigiert oder fährt oder, ferngesteuert geführt wird.

Nach einer Ausführungsform ist vorgesehen, dass der deaktivierte elektronische Schlüssel wieder aktiviert wird, so dass mittels des aktivierten elektronischen Schlüssels auf die eine oder die mehreren Fahrzeugkomponenten zugegriffen werden kann.

Dadurch wird insbesondere der technische Vorteil bewirkt, dass kein neuer elektronischer Schlüssel für einen Zugriff auf die eine oder die mehreren Fahrzeugkomponenten generiert oder erzeugt werden muss. Denn es kann effizient der deaktivierte elektronische Schlüssel nun wiederverwendet werden, insofern dieser wieder aktiviert wurde.

Anstelle oder zusätzlich zum Aktivieren des deaktivierten Schlüssels ist nach einer Ausführungsform vorgesehen, dass ein weiterer elektronischer Schlüssel für den Zugriff bereitgestellt wird. Der weitere Schlüssel wird nach einer Ausführungsform über das Kommunikationsnetzwerk an den Schlüsselverwaltungsserver und/oder das System und/oder an das Fahrzeug übermittelt oder gesendet. Der weitere Schlüssel kann neu generiert oder erzeugt werden, zum Beispiel mittels eines Endgeräts, vorzugsweise mittels eines mobilen Endgeräts. So kann zum Beispiel ein Fahrer mittels seines mobilen Endgeräts einen neuen elektronischen Schlüssel erzeugen oder generieren und diesen mittels seines Endgeräts an weitere Teilnehmer des Kommunikationsnetzwerks über das Kommunikationsnetzwerk senden, zum Beispiel an das Fahrzeug, an das System und/oder an den Schlüsselverwaltungsserver.

Der Gedanke hier ist also insbesondere, dass ein neuer Schlüssel generiert oder erzeugt wird, der für einen Zugriff auf das Fahrzeug verwendet werden kann.

Der neue oder weitere Schlüssel kann zum Beispiel den deaktivierten Schlüssel wieder aktivieren. Das heißt, dass zum Aktivieren des deaktivierten Schlüssels der neue oder weitere Schlüssel verwendet wird. Der neue oder weitere Schlüssel kann zum Beispiel direkt für den Zugriff auf das Fahrzeug, also auf die Fahrzeugkomponenten verwendet werden.

Durch die Verwendung eines weiteren Schlüssels kann eine Zugriffssteuerung noch einfacher und effizienter durchgeführt werden.

Gemäß einer weiteren Ausführungsform ist vorgesehen, dass zum Deaktivieren respektive Aktivieren ein Deaktivierungssignal respektive Aktivierungssignal über ein Kommunikationsnetzwerk von einem Zugriffskontrollsystem des Fahrzeugs zum Steuern des Zugriffs auf die eine oder die mehreren Fahrzeugkomponenten empfangen wird, so dass das Zugriffskontrollsystem Wissen darüber aufweist, dass der elektronische Schlüssel keinen Zugriff mehr respektive einen Zugriff auf die eine oder die mehreren Fahrzeugkomponenten hat.

Dadurch wird insbesondere der technische Vorteil bewirkt, dass unabhängig von einem eventuell vorhandenen Schlüsselverwaltungsserver dem Fahrzeug mitgeteilt werden kann, dass der elektronische Schlüssel deaktiviert oder aktiviert werden soll. Das Zugriffskontrollsystem hat somit in vorteilhafter Weise Wissen oder eine Kenntnis darüber, dass der elektronische Schlüssel keinen Zugriff mehr respektive einen Zugriff auf die einen oder die mehreren Fahrzeugkomponenten haben soll. Das heißt also, dass im Fall eines Missbrauchs eines Schlüsselverwaltungsservers, der beispielsweise einen elektronischen Schlüssel unzulässigerweise nicht deaktiviert hat, ein weiteres Sicherheitsnetz dahingehend gespannt ist, dass das Zugriffskontrollsystem den elektronischen Schlüssel entweder akzeptiert oder blockiert. So kann beispielsweise ein Fahrer des Fahrzeugs über sein mobiles Endgerät, allgemein seinem Endgerät, zum Beispiel einem Smartphone, zum Beispiel einem Mobilfunktelefon, das Deaktivierungssignal respektive das Aktivierungssignal über das Kommunikationsnetzwerk an das Zugriffskontrollsystem des Fahrzeugs senden. Das Zugriffskontrollsystem entzieht somit dem elektronischen Schlüssel entsprechende Zugriffsrechte oder Berechtigungen oder erklärt ihn für ungültig. Entsprechend kann das Zugriffskontrollsystem für eine Aktivierung dem elektronischen Schlüssel wieder Zugriffsrechte oder Berechtigungen zuweisen oder ihn wieder für gültig erklären. Das heißt also insbesondere, dass das Zugriffskontrollsystem ansprechend auf das Deaktivierungssignal einen Zugriff mittels eines elektronischen Schlüssels blockiert. Ansprechend auf ein Aktivierungssignal akzeptiert das Zugriffskontrollsystem einen Zugriff auf die einen oder die mehreren Fahrzeugkomponenten mittels des elektronischen Schlüssels.

Das heißt also, dass im Fall eines fahrzeugexternen oder entfernten Zugriffs mittels des elektronischen Schlüssels auf die eine oder die mehreren Fahrzeugkomponenten, selbst wenn der elektronische Schlüssel noch ansonsten gültig oder aktiviert ist, das Zugriffskontrollsystem dennoch den Zugriff vermeidet oder blockiert, also nicht zulässt, wenn es ein Deaktivierungssignal empfangen hat.

In einer anderen Ausführungsform ist vorgesehen, dass der elektronische Schlüssel vor dem Parken von einem Schlüsselverwaltungsserver über ein Kommunikationsnetzwerk empfangen wird, wobei der Schlüsselverwaltungsserver den Schlüssel nach dem Abstellen des Fahrzeugs deaktiviert. Dadurch wird insbesondere der technische Vorteil bewirkt, dass ein Fahrer des Fahrzeugs sich nicht mehr selbst um das Deaktivieren des elektronischen Schlüssels kümmern muss. Dies geschieht zum Beispiel automatisch durch den Schlüsselverwaltungsserver. Dadurch kann der Fahrer des Fahrzeugs eine Zeitersparnis bewirken. Da der Schlüsselverwaltungsserver in der Regel von einem Betreiber des Parkplatzes betrieben wird und dieser in der Regel gut Bescheid weiß, wann das Fahrzeug geparkt oder abgestellt wurde, kann somit ein Zeitpunkt, zu welchem der Schlüssel deaktiviert werden soll, gut und einfach bestimmt werden. Denn der elektronische Schlüssel sollte in der Regel nicht vor einem Abstellen des Fahrzeugs deaktiviert werden. Der elektronische Schlüssel darf also nicht zu früh deaktiviert werden.

Gemäß einer weiteren Ausführungsform ist vorgesehen, dass der Schlüsselverwaltungsserver über das Kommunikationsnetzwerk einen Deaktivierungsbefehl zum Deaktivieren des elektronischen Schlüssels respektive einen Aktivierungsbefehl zum Aktivieren des deaktivierten Schlüssels empfängt, wobei der Schlüsselverwaltungsserver ansprechend auf den Deaktivierungsbefehl den elektronischen Schlüssel deaktiviert respektive ansprechend auf den Aktivierungsbefehl den elektronischen Schlüssel aktiviert.

Dadurch wird in vorteilhafter Weise der technische Effekt bewirkt, dass auch über das Kommunikationsnetzwerk der Schlüssel aktiviert oder deaktiviert werden kann. Das heißt also beispielsweise, dass ein Fahrer des Fahrzeugs dem Schlüsselverwaltungsserver einen Deaktivierungsbefehl respektive Aktivierungsbefehl senden kann, um den elektronischen Schlüssel zu deaktivieren oder zu aktivieren. Der Fahrer des Fahrzeugs kann somit in vorteilhafter Weise eine Kontrolle über das Aktivieren respektive Deaktivieren seines elektronischen Schlüssels behalten. Dadurch kann in vorteilhafter Weise ein unerlaubter Zugriff auf das Fahrzeug mittels des elektronischen Schlüssels noch besser verhindert werden.

In einer anderen Ausführungsform ist vorgesehen, dass eine Zeit, zu welcher der deaktivierte Schlüssel wieder aktiviert wird, derart ermittelt wird, dass ausreichend Zeit zur Verfügung steht, um das Fahrzeug mittels des aktivierten Schlüssels zu starten, damit das Fahrzeug von der Parkposition rechtzeitig zu einer Abholposition fahren kann, so dass eine Person das Fahrzeug an der Abholposition zu einer vorgegebenen Abholzeit abholen kann.

Dadurch wird in vorteilhafter Weise der technische Effekt bewirkt, dass der deaktivierte Schlüssel so lange deaktiviert bleibt, bis er wieder für das AVP, also dem Automatic Valet Parking, also dem automatischen Parkvorgang, benötigt wird. Denn solange das Fahrzeug noch nicht zu seiner Abholposition fahren muss, muss in der Regel auch kein Zugriff mehr auf das Fahrzeug erfolgen. Der Schlüssel kann und sollte also deaktiviert bleiben. Ein früheres Aktivieren des Schlüssels könnte ein Missbrauchsrisiko erhöhen.

In einer anderen Ausführungsform ist vorgesehen, dass sich der elektronische Schlüssel nach einer vorgegebenen Deaktivierungszeit selbst deaktiviert. Dadurch wird insbesondere der technische Vorteil bewirkt, dass ohne ein weiteres Zutun sich der elektronische Schlüssel selbst deaktiviert. Dadurch wird in vorteilhafter Weise ein weiteres Sicherheitsnetz gespannt gegen einen Missbrauch des elektronischen Schlüssels. Sollte also zum Beispiel ein Schlüsselverwaltungsserver kompromittiert worden sein und/oder sollte ein Kommunikationsnetzwerk zum Senden von Deaktivierungsbefehlen gestört sein, so würde sich der elektronische Schlüssel nach der vorgegebenen Deaktivierungszeit dennoch selbst deaktivieren.

Gemäß einer weiteren Ausführungsform ist vorgesehen, dass das Abstellen des Fahrzeugs mittels eines fahrzeugexternen Überwachungssystems überwacht wird, wobei basierend auf der Überwachung ein Ende des Abstellens detektiert wird. Dadurch wird insbesondere der technische Vorteil bewirkt, dass ein Ende des Abstellens detektiert werden kann und insofern ein Anfang des Parkens erkannt werden kann. Das heißt also insbesondere, dass dadurch ein Zeitpunkt, zu welchem der elektronische Schlüssel deaktiviert werden soll und dann auch wird, erkannt oder detektiert werden kann.

Das Überwachungssystem umfasst nach einer Ausführungsform eine oder mehrere Videokameras und/oder einen oder mehrere Radarsensoren und/oder einen oder mehrere Ultraschallsensoren und/oder einen oder mehrere Lidarsensoren und/oder einen oder mehrere Lasersensoren und/oder eine oder mehrere Lichtschranken.

Nach einer Ausführungsform ist vorgesehen, dass der Schlüsselverwaltungsserver ferner ausgebildet ist, einen deaktivierten elektronischen Schlüssel wieder zu aktivieren, so dass mittels des aktivierten elektronischen Schlüssels auf die eine oder die mehreren Fahrzeugkomponenten zugegriffen werden kann.

Gemäß einer weiteren Ausführungsform ist vorgesehen, dass das System einen Prozessor umfasst, der ausgebildet ist, eine Zeit, zu welcher der deaktivierte Schlüssel wieder aktiviert werden soll, derart zu ermitteln, dass ausreichend Zeit zur Verfügung steht, um das Fahrzeug mittels des aktivierten Schlüssels zu starten, damit das Fahrzeug von der Parkposition rechtzeitig zu einer Abholposition fahren kann, so dass eine Person das Fahrzeug an der Abholposition zu einer vorgegebenen Abholzeit abholen kann, wobei der Schlüsselverwaltungsserver ferner ausgebildet ist, den deaktivierten Schlüssel zu der vorbestimmten Zeit zu aktivieren.

Nach noch einer Ausführungsform ist vorgesehen, dass das System eine Kommunikationsschnittstelle umfasst, die ausgebildet ist, über ein Kommunikationsnetzwerk einen Deaktivierungsbefehl zum Deaktivieren des elektronischen Schlüssels respektive einen Aktivierungsbefehl zum Aktivieren des deaktivierten Schlüssels zu empfangen, wobei der Schlüsselverwaltungsserver ausgebildet ist, ansprechend auf den Deaktivierungsbefehl den elektronischen Schlüssel zu deaktivieren respektive ansprechend auf den Aktivierungsbefehl den elektronischen Schlüssel zu aktivieren.

Nach noch einer Ausführungsform ist vorgesehen, dass das System ein fahrzeugexternes Überwachungssystem zum Überwachen des Abstellens des Fahrzeugs aufweist, so dass basierend auf der Überwachung ein Ende des Abstellens detektiert werden kann.

Nach noch einer Ausführungsform ist vorgesehen, dass der Teilnehmer für ein Kommunikationsnetzwerk eingerichtet oder ausgebildet ist, das Verfahren zum Betreiben eines Teilnehmers für ein Kommunikationsnetzwerk durchzuführen oder auszuführen.

Funktionalitäten des Verfahrens ergeben sich analog aus Funktionalitäten des Systems respektive des Parksystems respektive des Zugriffskontrollsystems respektive des Fahrzeugs respektive des Teilnehmers und umgekehrt. Das heißt also, dass sich Vorrichtungsmerkmale aus ihren entsprechenden Verfahrensmerkmalen oder Systemmerkmalen ergeben und umgekehrt. Entsprechend gemachte Ausführungen und genannte Vorteile im Zusammenhang mit dem Verfahren oder den Verfahren gelten analog für das System, das Parksystem, das Zugriffskontrollsystem, das Fahrzeug und den Teilnehmer und umgekehrt.

Nach einer Ausführungsform ist vorgesehen, dass die eine oder die mehreren Fahrzeugkomponenten Elemente ausgewählt aus der folgenden Gruppe von Fahrzeugkomponenten sind: Türöffnungssystem, Startsystem zum Starten eines Antriebsmotors des Fahrzeugs, Beleuchtungssystem des Fahrzeugs, Öffnungseinrichtung eines Handschuhfachs, elektronische Geräte wie zum Beispiel ein Radio oder ein Navigationsgerät, ein Lenkradsystem, ein Antriebssystem, ein Getriebesystem.

Nach einer Ausführungsform ist vorgesehen, dass eine Fahrt des Fahrzeugs auf oder innerhalb des Parkplatzes zumindest teilweise, insbesondere vollständig, überwacht und/oder dokumentiert wird. Dadurch wird insbesondere der technische Vorteil bewirkt, dass im Fehlerfall schnell und effizient geeignete Maßnahmen ergriffen werden können. Denn durch die Überwachung können Fehler schnell erkannt werden. Das Aufzeichnen respektive Dokumentieren der Fahrt des Fahrzeugs bewirkt respektive bewirken insbesondere den technischen Vorteil, dass auch nach der Fahrt des Fahrzeugs diese nachvollzogen werden kann. Insbesondere können Fehler, die während der Fahrt aufgetreten sind, nachvollzogen werden. Dies kann für eventuelle Beweiszwecke im Fall einer Beschädigung des Fahrzeugs vorteilhaft sein. Das Überwachen und/oder Aufzeichnen und/oder Dokumentieren wird insbesondere mittels des Überwachungssystems durchgeführt.

Das heißt also, dass beispielsweise eine Fahrt des Fahrzeugs von der Abgabestelle oder Abgabeposition zur Parkposition überwacht respektive aufgezeichnet oder dokumentiert wird. Analog wird dies beispielsweise für den Einparkvorgang in die Parkposition, also das Einparken in die Parkposition durchgeführt. Analog auch für ein Ausparken aus der Parkposition und auch insbesondere analog für eine Rückfahrt zu der Abgabestelle. Die im Zusammenhang mit dem Überwachen respektive Aufzeichnen oder Dokumentieren ermittelten oder erzeugten Daten, die allgemein auch als Überwachungsdaten bezeichnet werden können, werden nach einer Ausführungsform über das Kommunikationsnetzwerk an einen oder den Teilnehmer des Kommunikationsnetzwerks gesendet. Dadurch kann der Teilnehmer die überwachte oder aufgezeichnete oder dokumentierte Fahrt verfolgen. Dies wird insbesondere in Echtzeit durchgeführt, sodass der Fahrer des Fahrzeugs beispielsweise über sein Mobilfunktelefon live die vorstehend genannten Vorgänge, also die Fahrt von der Abgabestelle zur Parkposition, das Einparken in die Parkposition, das Ausparken aus der Parkposition und die Rückfahrt zur Abgabestelle, live verfolgen kann. Überwachungsdaten umfassen insbesondere Videodaten, sodass eine visuelle Überwachung respektive Aufzeichnung respektive Dokumentation vorgesehen ist, sodass der Fahrer beispielsweise über sein mobiles Endgerät die vorstehend genannten Vorgänge visuell verfolgen kann.

Nach einer Ausführungsform ist vorgesehen, dass das Fahrzeug nach einem Abstellen des Fahrzeugs dem System oder dem Parksystem über das Kommunikationsnetzwerk mitteilt, dass es nun parkt, also dass der Parkvorgang somit begonnen hat, also dass das Abstellen nun beendet ist, sodass das System, insbesondere das Parksystem, also insbesondere der Schlüsselverwaltungsserver Kenntnis darüber hat, dass ein elektronischer Schlüssel nun nicht mehr benötigt wird, sodass der Schlüsselverwaltungsserver diesen nun deaktivieren kann respektive deaktiviert.

Nach einer Ausführungsform ist der Teilnehmer ein Endgerät, insbesondere ein mobiles Endgerät, zum Beispiel ein Mobilfunktelefon, beispielsweise ein Smartphone. Der Teilnehmer ist nach einer Ausführungsform im Fahrzeug eingebaut. Nach einer Ausführungsform ist der Teilnehmer das Fahrzeug.

Die Formulierung "respektive" im Sinne der vorliegenden Erfindung umfasst insbesondere die Formulierung "und/oder".

Die Erfindung wird im Folgenden anhand von bevorzugten Ausführungsbeispielen näher erläutert. Hierbei zeigen
Fig. 1 ein Ablaufdiagramm eines Verfahrens zum Steuern eines Zugriffs auf ein Fahrzeug,
Fig. 2 ein System zum Steuern eines Zugriffs auf ein Fahrzeug,
Fig. 3 ein Parksystem für Fahrzeuge,
Fig. 4 ein Zugriffskontrollsystem zum Steuern eines Zugriffs auf ein Fahrzeug,
Fig. 5 ein Fahrzeug,
Fig. 6 einen Teilnehmer für ein Kommunikationsnetzwerk und
Fig. 7 ein Verfahren zum Betreiben eines Teilnehmers für ein Kommunikationsnetzwerk.

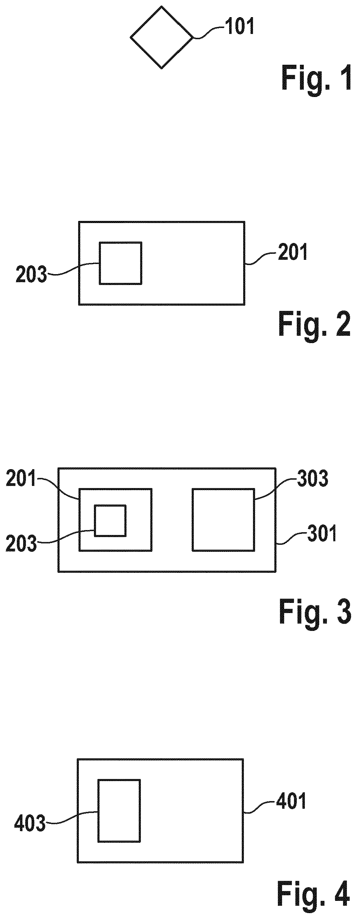

Fig. 1 zeigt ein Ablaufdiagramm eines Verfahrens zum Steuern eines Zugriffs auf ein Fahrzeug.

Gemäß einem Schritt 101 wird ein elektronischer Schlüssel für einen Zugriff auf eine oder mehrere Fahrzeugkomponenten nach einem Abstellen des Fahrzeugs zum Parken des Fahrzeugs in einer Parkposition deaktiviert. Dadurch wird in vorteilhafter Weise bewirkt, dass ein mittels des deaktivierten elektronischen Schlüssels versuchter Zugriff auf die eine oder die mehreren Fahrzeugkomponenten des in der Parkposition geparkten Fahrzeugs verhindert werden kann.

Nach einer Ausführungsform wurde der elektronische Schlüssel zuvor an einen Parkplatzverwaltungsserver zum Verwalten oder Betreiben eines Parkplatzes gesendet, wobei ein solcher Parkplatzverwaltungsserver vorzugsweise einen Schlüsselverwaltungsserver, insbesondere das erfindungsgemäße System zum Steuern eines Zugriffs auf ein Fahrzeug, umfasst.

Das heißt also insbesondere, dass im Rahmen eines Automatic Valet Parking oder eines automatischen Parkvorgangs das Fahrzeug vor oder an der Abgabestelle oder Abgabeposition einen elektronischen Schlüssel an den Parkplatzverwaltungsserver sendet, sodass dieser das Fahrzeug im Rahmen eines automatischen Parkvorgangs zu der Parkposition führt respektive dem Fahrzeug für eine autonome Fahrt zu der Parkposition relevante Daten (zum Beispiel eine digitale Karte des Parkplatzes) zur Verfügung stellt. Der Fahrer kann sein Fahrzeug an der Abgabeposition verlassen. Das Fahrzeug fährt anschließend autonom zu der Parkposition und parkt dort ein, stellt sich also dort ab. Hierfür muss in der Regel auf eine oder mehrere Fahrzeugkomponenten seitens des erfindungsgemäßen Systems oder seitens des Parkplatzverwaltungsservers zugegriffen werden. Dies wird insbesondere mittels des elektronischen Schlüssels durchgeführt. Dieser wird aber nach dem Abstellen deaktiviert, sodass während des Parkens des Fahrzeugs, also während das Fahrzeug in der Parkposition parkt, der Schlüssel nicht mehr für einen Zugriff auf das Fahrzeug, also auf die eine oder die mehreren Fahrzeugkomponenten verwendet werden kann.

Nach einer Ausführungsform wird nach einem Ende einer vorbestimmten Parkdauer der Schlüssel wieder aktiviert, sodass mittels des elektronischen Schlüssels auf das Fahrzeug zugegriffen werden kann, insbesondere kann das Fahrzeug mittels des elektronischen Schlüssels gestartet werden, sodass es dann zurück zu der Abgabestelle oder Abgabeposition fahren oder geführt werden kann.

Fig. 2 zeigt ein System 201 zum Steuern eines Zugriffs auf ein Fahrzeug.

Das System 201 umfasst einen Schlüsselverwaltungsserver, der ausgebildet ist, einen elektronischen Schlüssel für einen Zugriff auf eine oder mehrere Fahrzeugkomponenten nach einem Abstellen des Fahrzeugs zum Parken des Fahrzeugs in einer Parkposition zu deaktivieren, sodass ein mittels des deaktivierten elektronischen Schlüssels versuchter Zugriff auf die eine oder die mehreren Fahrzeugkomponenten des geparkten Fahrzeugs verhindert werden kann.

Fig. 3 zeigt ein Parksystem 301 für Fahrzeuge. Das Parksystem 301 umfasst einen Parkplatz 303 sowie das System 201 der Fig. 2.

Fig. 4 zeigt ein Zugriffskontrollsystem 401 zum Steuern eines Zugriffs auf ein Fahrzeug, also zum Steuern eines Zugriffs auf eine oder mehrere Fahrzeugkomponenten des Fahrzeugs.

Das Zugriffskontrollsystem 401 umfasst eine Kommunikationsschnittstelle 403, die ausgebildet ist, ein Deaktivierungssignal zum Deaktivieren respektive ein Aktivierungssignal zum Aktivieren eines elektronischen Schlüssels für einen Zugriff auf eine oder mehrere Fahrzeugkomponenten nach einem Abstellen des Fahrzeugs zum Parken des Fahrzeugs in einer Parkposition über ein Kommunikationsnetzwerk zu empfangen, sodass das Zugriffskontrollsystem 401 Wissen darüber aufweisen kann, dass der elektronische Schlüssel keinen Zugriff mehr respektive einen Zugriff auf die eine oder die mehreren Fahrzeugkomponenten hat. Das Zugriffskontrollsystem 401 ist somit vorzugsweise ausgebildet, ansprechend auf ein empfangenes Deaktivierungssignal respektive Aktivierungssignal einen entfernten Zugriff auf das Fahrzeug, also auf die eine oder die mehreren Fahrzeugkomponenten, zu verhindern oder zuzulassen.

Das Zugriffskontrollsystem 401 ist also ferner ausgebildet, einen mittels eines aktivierten elektronischen Schlüssels geführten Zugriff auf die eine oder die mehreren Fahrzeugkomponenten zu erlauben und einen mittels eines deaktivierten elektronischen Schlüssels geführten Zugriff zu verhindern.

Das Zugriffskontrollsystem umfasst beispielsweise einen Prozessor zum entsprechenden Verarbeiten des Deaktivierungssignals respektive des Aktivierungssignals und zum entsprechenden Erlauben (Zulassen) oder Verhindern eines Zugriffs.

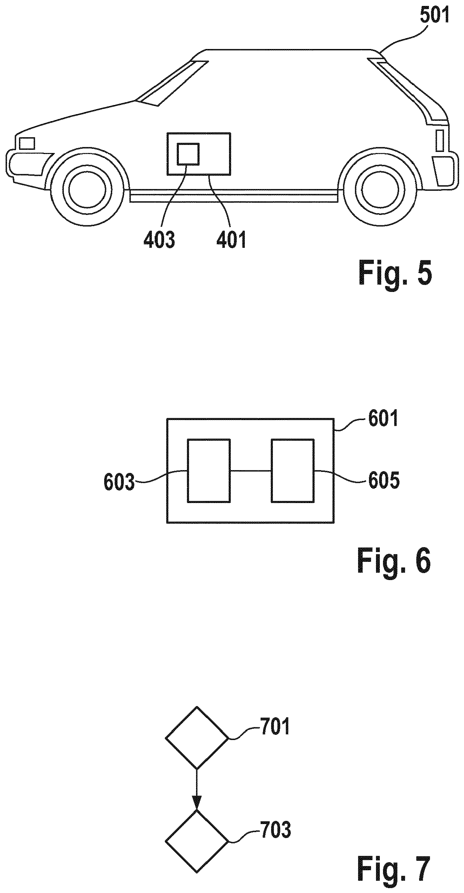

Fig. 5 zeigt ein Fahrzeug 501, wobei das Fahrzeug 501 das Zugriffskontrollsystem 401 der Fig. 4 umfasst.

Fig. 6 zeigt einen Teilnehmer 601 für ein Kommunikationsnetzwerk.

Der Teilnehmer 601 umfasst einen Prozessor 603, der ausgebildet ist, ein Deaktivierungssignal respektive Aktivierungssignal für ein Zugriffskontrollsystem eines Fahrzeugs zum Steuern des Zugriffs auf eine oder mehrere Fahrzeugkomponenten zu ermitteln. Der Teilnehmer 601 umfasst eine Kommunikationsschnittstelle 605, die ausgebildet ist, das Deaktivierungssignal respektive Aktivierungssignal an das Zugriffskontrollsystem über ein Kommunikationsnetzwerk zu senden, sodass das Zugriffskontrollsystem Wissen darüber aufweisen kann, dass der elektronische Schlüssel keinen Zugriff mehr respektive einen Zugriff auf die eine oder die mehreren Fahrzeugkomponenten hat.

Nach einer Ausführungsform ist der Teilnehmer ein Endgerät, insbesondere ein mobiles Endgerät, beispielsweise ein Mobilfunktelefon, zum Beispiel ein Smartphone.

Fig. 7 zeigt ein Ablaufdiagramm eines Verfahrens zum Betreiben eines Teilnehmers für ein Kommunikationsnetzwerk respektive eines Teilnehmers eines Kommunikationsnetzwerks.

Gemäß einem Schritt 701 ermittelt der Teilnehmer ein Deaktivierungssignal respektive Aktivierungssignal für ein Zugriffskontrollsystem eines Fahrzeugs zum Steuern des Zugriffs auf eine oder mehrere Fahrzeugkomponenten. Der Teilnehmer sendet das Deaktivierungssignal respektive Aktivierungssignal gemäß einem Schritt 703 an das Zugriffskontrollsystem über ein Kommunikationsnetzwerk, sodass das Zugriffskontrollsystem in vorteilhafter Weise Wissen darüber aufweisen kann, dass der elektronische Schlüssel keinen Zugriff mehr respektive einen Zugriff auf die eine oder die mehreren Fahrzeugkomponenten hat.

Bei dem Teilnehmer handelt es sich nach einer Ausführungsform um den Teilnehmer 601 gemäß Fig. 6.

Zusammenfassend stellt die Erfindung ein technisches und effizientes Konzept bereit, mittels welchen verhindert werden kann, dass das Fahrzeug während des Parkvorgangs von einem Dritten geöffnet und/oder gefahren wird, indem mittels eines elektronischen Schlüssels auf eine oder mehrere Fahrzeugkomponenten zugegriffen wird. Ein solcher elektronischer Schlüssel wird in der Regel an einen Betreiben des Parkplatzes vor einem Parkvorgang übermittelt. Aufgrund des erfindungsgemäßen Deaktivierens des elektronischen Schlüssels nach dem Abstellen des Fahrzeugs kann in vorteilhafter Weise sichergestellt werden, dass ein Betreiber des Parkplatzes während der Parkzeitdauer nicht unbefugt auf das Fahrzeug zugreift.

Der erfindungsgemäße Gedanke hier ist insbesondere und unter anderem, dass beispielsweise ein Fahrer und/oder ein Eigentümer des Fahrzeugs den elektronischen Schlüssel, der allgemein auch als ein virtueller Schlüssel bezeichnet werden kann, online, zum Beispiel über ein Endgerät, insbesondere ein mobiles Endgerät, zum Beispiel ein Smartphone, insbesondere ein Mobilfunktelefon, deaktivieren kann, nachdem das Fahrzeug in der Parkposition, zum Beispiel in einer Parkbucht, steht.

Vor einem Ende des Parkvorgangs ist nach einer Ausführungsform vorgesehen, dass der Fahrer oder Eigentümer den deaktivierten elektronischen Schlüssel wieder aktiviert, damit das Fahrzeug in vorteilhafter Weise zurück zu der Abgabestelle oder zu der Abgabeposition fahren kann. Das heißt also, dass beispielsweise vom Teilnehmer ein Aktivierungssignal an das Zugriffskontrollsystem gesendet wird. Insbesondere wird ein Aktivierungsbefehl an den Schlüsselverwaltungsserver gesendet.

Nach einer Ausführungsform ist der Prozessor ausgebildet, einen Deaktivierungsbefehl zum Deaktivieren des elektronischen Schlüssels respektive einen Aktivierungsbefehl zum Aktivieren des deaktivierten Schlüssels zu ermitteln, wobei die Kommunikationsschnittstelle ausgebildet ist, den Deaktivierungsbefehl respektive den Aktivierungsbefehl über das Kommunikationsnetzwerk an einen Schlüsselverwaltungsserver, insbesondere an das System zum Steuern eines Zugriffs auf ein Fahrzeug zu senden.

Nach einer Ausführungsform werden die Zeitmomente zum Aktivieren und Deaktivieren vom Parkplatzmanagementsystem, also dem Parkplatzverwaltungsserver, insbesondere dem erfindungsgemäßen System, zum Beispiel dem Parksystem, getriggert. Dies zum Beispiel deshalb, da das System in der Regel die gesamten Vorgänge innerhalb des Parkplatzes, zum Beispiel im Parkhaus, koordiniert.

Nach einer Ausführungsform ist vorgesehen, dass der Fahrer oder Eigentümer alle Vorgänge während der ganzen Fahrt von der Abgabestelle zur Parkposition, das Einparken in die Parkposition, das Ausparken aus der Parkposition und eine Rückfahrt zur Abgabestelle zusätzlich online verfolgen kann, zum Beispiel visuell über ein mobiles Endgerät.

## Patentansprüche

1. Verfahren zum Steuern eines Zugriffs auf ein Fahrzeug (501), wobei ein elektronischer Schlüssel für einen Zugriff auf eine oder mehrere Fahrzeugkomponenten nach einem Abstellen des Fahrzeugs (501) zum Parken des Fahrzeugs (501) in einer Parkposition, so dass das Fahrzeug (501) in der Parkposition parkt, deaktiviert (101) wird, so dass ein mittels des deaktivierten elektronischen Schlüssels versuchter Zugriff auf die eine oder die mehreren Fahrzeugkomponenten des in der Parkposition geparkten Fahrzeugs (501) verhindert werden kann, **dadurch gekennzeichnet, dass** das Abstellen des Fahrzeugs (501) mittels eines fahrzeugexternen Überwachungssystems überwacht wird, wobei das fahrzeugexterne Überwachungssystem eine oder mehrere Videokameras und/oder einen oder mehrere Radarsensoren und/oder einen oder mehrere Ultraschallsensoren und/oder einen oder mehrere Lidarsensoren und/oder einen oder mehrere Lasersensoren und/oder eine oder mehrere Lichtschranken umfasst und wobei basierend auf der Überwachung ein Ende des Abstellens, was bedeutet, dass ein Parkvorgang somit begonnen hat, detektiert wird.

2. Verfahren nach Anspruch 1, wobei der deaktivierte elektronische Schlüssel wieder aktiviert wird, so dass mittels des aktivierten elektronischen Schlüssels auf die eine oder die mehreren Fahrzeugkomponenten zugegriffen werden kann.

3. Verfahren nach Anspruch 1 oder 2, wobei zum Deaktivieren respektive Aktivieren ein Deaktivierungssignal respektive Aktivierungssignal über ein Kommunikationsnetzwerk von einem Zugriffskontrollsystem (401) des Fahrzeugs (501) zum Steuern des Zugriffs auf die eine oder die mehreren Fahrzeugkomponenten empfangen wird, so dass das Zugriffskontrollsystem (401) Wissen darüber aufweist, dass der elektronische Schlüssel keinen Zugriff mehr respektive einen Zugriff auf die eine oder die mehreren Fahrzeugkomponenten hat.

4. Verfahren nach einem der vorherigen Ansprüche, wobei der elektronische Schlüssel vor dem Parken von einem Schlüsselverwaltungsserver (203) über ein Kommunikationsnetzwerk empfangen wird, wobei der Schlüsselverwaltungsserver (203) den Schlüssel nach dem Abstellen des Fahrzeugs (501) deaktiviert.

5. Verfahren nach Anspruch 4, wobei der Schlüsselverwaltungsserver (203) über das Kommunikationsnetzwerk ein Deaktivierungsbefehl zum Deaktivieren des elektronischen Schlüssels respektive einen Aktivierungsbefehl zum Aktivieren des deaktivierten Schlüssels empfängt, wobei der Schlüsselverwaltungsserver (203) ansprechend auf den Deaktivierungsbefehl den elektronischen Schlüssel deaktiviert respektive ansprechend auf den Aktivierungsbefehl den elektronischen Schlüssel aktiviert.

6. Verfahren nach einem der vorherigen Ansprüche, wobei sich der elektronische Schlüssel nach einer vorgegebenen Deaktivierungszeit selbst deaktiviert.

7. Verfahren nach einem der vorherigen Ansprüche, wobei ein weiterer elektronischer Schlüssel für den Zugriff bereitgestellt wird, der vorzugsweise über das Kommunikationsnetzwerk an den Schlüsselverwaltungsserver (203) gesendet wird.

8. System (201) zum Steuern eines Zugriffs auf ein Fahrzeug (501), umfassend einen Schlüsselverwaltungsserver (203), der ausgebildet ist, einen elektronischen Schlüssel für einen Zugriff auf eine oder mehrere Fahrzeugkomponenten nach einem Abstellen des Fahrzeugs (501) zum Parken des Fahrzeugs (501) in einer Parkposition zu deaktivieren, so dass ein mittels des deaktivierten elektronischen Schlüssels versuchter Zugriff auf die eine oder die mehreren Fahrzeugkomponenten des geparkten Fahrzeugs (501) verhindert werden kann,
**gekennzeichnet durch** ein fahrzeugexternes Überwachungssystem zum Überwachen des Abstellens des Fahrzeugs (501), so dass basierend auf der Überwachung ein Ende des Abstellens detektiert werden kann, wobei das fahrzeugexterne Überwachungssystem eine oder mehrere Videokameras und/oder einen oder mehrere Radarsensoren und/oder einen oder mehrere Ultraschallsensoren und/oder einen oder mehrere Lidarsensoren und/oder einen oder mehrere Lasersensoren und/oder eine oder mehrere Lichtschranken umfasst.

9. System (201) nach Anspruch 8, wobei der Schlüsselverwaltungsserver (203) ferner ausgebildet ist, einen deaktivierten elektronischen Schlüssel wieder zu aktivieren, so dass mittels des aktivierten elektronischen Schlüssels auf die eine oder die mehreren Fahrzeugkomponenten zugegriffen werden kann.

10. System (201) nach Anspruch 8 oder 9, umfassend ferner eine Kommunikationsschnittstelle, die ausgebildet ist, über ein Kommunikationsnetzwerk einen Deaktivierungsbefehl zum Deaktivieren des elektronischen Schlüssels respektive einen Aktivierungsbefehl zum Aktivieren des deaktivierten Schlüssels zu empfangen, wobei der Schlüsselverwaltungsserver (203) ausgebildet ist, ansprechend auf den Deaktivierungsbefehl den elektronischen Schlüssel zu deaktivieren respektive ansprechend auf den Aktivierungsbefehl den elektronischen Schlüssel zu aktivieren.

11. Parksystem (301) für Fahrzeuge (501), umfassend einen Parkplatz (303). **gekennzeichnet durch** das System (201) nach einem der Ansprüche 8 bis 10.

12. Computerprogramm, umfassend Programmcode zur Durchführung des Verfahrens nach einem der Ansprüche 1 bis 7, wenn das Computerprogramm auf einem Computer ausgeführt wird.

## Claims

1. Method for controlling access to a vehicle (501), wherein an electronic key for accessing one or more vehicle components after the vehicle (501) is shut down, in order to park the vehicle (501) in a parked position, is deactivated (101) so that the vehicle (501) is parked in the parked position, so that access, attempted by means of the deactivated electronic key, to the one or more vehicle components of the vehicle (501) parked in the parked position can be prevented, **characterized in that** the shutting down of the vehicle (501) is monitored by means of a vehicle-external monitoring system, wherein the vehicle-external monitoring system comprises one or more video cameras and/or one or more radar sensors and/or more ultrasonic sensors and/or one or more lidar sensors and/or one or more laser sensors and/or one or more photoelectric barriers, and wherein the end of the shutting down, which means that a parking process has therefore begun, is detected on the basis of the monitoring.

2. Method according to Claim 1, wherein the deactivated electronic key is re-activated, so that the one or more vehicle components can be accessed by means of the activated electronic key.

3. Method according to Claim 1 or 2, wherein, in order to deactivate or activate, a deactivation signal or activation signal is received via a communication network from an access control system (401) of the vehicle (501) in order to control the access to the one or more vehicle components, so that the access control system (401) knows that the electronic key has no access any more or has access to the one or more vehicle components.

4. Method according to one of the preceding claims, wherein, before the parking, the electronic key is received by a key management server (203) via a communication network, wherein the key management server (203) deactivates the key after shutting down of the vehicle (501).

5. Method according to Claim 4, wherein the key management server (203) receives via the communication network a deactivation command for deactivating the electronic key or an activation command for activating the deactivated key, wherein the key management server (203) deactivates the electronic key in response to the deactivation command or activates the electronic key in response to the activation command.

6. Method according to one of the preceding claims, wherein the electronic key deactivates itself after a specified deactivation time.

7. Method according to one of the preceding claims, wherein a further electronic key is made available for access, which key is preferably transmitted to the key management server (203) via the communication network.

8. System (201) for controlling access to a vehicle (501), comprising a key management server (203) which is designed to deactivate an electronic key for access to one or more vehicle components after the vehicle (501) is shut down, in order to park the vehicle (501) in a parked position, so that access, attempted by means of the deactivated electronic key, to the one or more vehicle components of the parked vehicle (501) can be prevented, **characterized by** a vehicle-external monitoring system for monitoring the shutting down of the vehicle (501), so that the end of the shutting down can be detected on the basis of the monitoring, wherein the vehicle-external monitoring system comprises one or more video cameras and/or one or more radar sensors and/or one or more ultrasonic sensors and/or one or more lidar sensors and/or one or more laser sensors and/or photoelectric barriers.

9. System (201) according to Claim 8, wherein the key management server (203) is also designed to reactivate a deactivated electronic key, so that the one or more vehicle components can be accessed by means of the activated electronic key.

10. System (201) according to Claim 8 or 9, also comprising a communication interface which is designed to receive, via a communication network, a deactivation command for deactivating the electronic key or an activation command for activating the deactivated key, wherein the key management server (203) is designed to deactivate the electronic key in response to the deactivation command or activate the electronic key in response to the activation command.

11. Parking system (301) for vehicles (501), comprising a parking space (303), **characterized by** the system (201) according to one of Claims 8 to 10.

12. Computer program comprising program code for carrying out the method according to one of Claims 1 to 7 when the computer program is run on a computer.

## Revendications

1. Procédé de commande d'un accès à un véhicule (501), une clé électronique pour un accès à un ou plusieurs composants de véhicule étant désactivée (101) après une mise à l'arrêt du véhicule (501) en vue de stationner le véhicule (501) dans une position de stationnement, de sorte que le véhicule (501) stationne dans la position de stationnement, de sorte qu'un accès tenté au moyen de la clé électronique désactivée audit un ou aux plusieurs composants de véhicule du véhicule (501) stationné dans la position de stationnement puisse être empêché, **caractérisé en ce que** la mise à l'arrêt du véhicule (501) est surveillée au moyen d'un système de surveillance externe au véhicule, le système de surveillance externe au véhicule comportant une ou plusieurs caméras vidéo et/ou un ou plusieurs capteurs radar et/ou un ou plusieurs capteurs à ultrasons et/ou un ou plusieurs capteurs lidar et/ou un ou plusieurs capteurs laser et/ou une ou plusieurs barrières photoélectriques et une fin de la mise à l'arrêt, ce qui veut dire qu'une opération de stationnement a ainsi commencé, étant détectée en se basant sur la surveillance.

2. Procédé selon la revendication 1, la clé électronique désactivée étant de nouveau activée, de sorte que l'accès audit un ou aux plusieurs composants de véhicule est possible au moyen de la clé électronique activée.

3. Procédé selon la revendication 1 ou 2, un signal de désactivation ou un signal d'activation étant reçu, pour la désactivation ou l'activation, par le biais d'un réseau de communication par un système de contrôle d'accès (401) du véhicule (501) servant à commander l'accès audit un ou aux plusieurs composants de véhicule, de sorte que le système de contrôle d'accès (401) possède des connaissances à propos du fait que la clé électronique n'a plus accès ou dispose d'un accès audit un ou aux plusieurs composants de véhicule.

4. Procédé selon l'une des revendications précédentes, la clé électronique étant, avant le stationnement, reçue par un serveur de gestion de clés (203) par le biais d'un réseau de communication, le serveur de gestion de clés (203) désactivant la clé après la mise à l'arrêt du véhicule (501).

5. Procédé selon la revendication 4, le serveur de gestion de clés (203) recevant par le biais du réseau de communication une instruction de désactivation pour désactiver la clé électronique ou une instruction d'activation pour activer la clé désactivée, le serveur de gestion de clés (203) désactivant la clé électronique en réaction à l'instruction de désactivation ou activant la clé électronique en réaction à l'instruction d'activation.

6. Procédé selon l'une des revendications précédentes, la clé électronique se désactivant elle-même après une durée de désactivation prédéfinie.

7. Procédé selon l'une des revendications précédentes, une clé électronique supplémentaire étant mise à disposition pour l'accès, laquelle est de préférence envoyée au serveur de gestion de clés (203) par le biais du réseau de communication.

8. Système (201) de commande d'un accès à un véhicule (501), comprenant un serveur de gestion de clés (203) qui est configuré pour désactiver une clé électronique pour un accès à un ou plusieurs composants de véhicule après une mise à l'arrêt du véhicule (501) en vue de stationner le véhicule (501) dans une position de stationnement, de sorte qu'un accès tenté au moyen de la clé électronique désactivée audit un ou aux plusieurs composants de véhicule du véhicule (501) stationné puisse être empêché, **caractérisé par** un système de surveillance externe au véhicule destiné à surveiller la mise à l'arrêt du véhicule (501), de sorte qu'une fin de la mise à l'arrêt puisse être détectée en se basant sur la surveillance, le système de surveillance externe au véhicule comportant une ou plusieurs caméras vidéo et/ou un ou plusieurs capteurs radar et/ou un ou plusieurs capteurs à ultrasons et/ou un ou plusieurs capteurs lidar et/ou un ou plusieurs capteurs laser et/ou une ou plusieurs barrières photoélectriques.

9. Système (201) selon la revendication 8, le serveur de gestion de clés (203) étant en outre configuré pour réactiver une clé électronique désactivée, de sorte que l'accès à l'un ou aux plusieurs composants de véhicule est possible au moyen de la clé électronique activée.

10. Système (201) selon la revendication 8 ou 9, comprenant en outre une interface de communication qui est configurée pour recevoir, par le biais d'un réseau de communication, une instruction de désactivation pour désactiver la clé électronique ou une instruction d'activation pour activer la clé désactivée, le serveur de gestion de clés (203) étant configuré pour désactiver la clé électronique en réaction à l'instruction de désactivation ou pour activer la clé électronique en réaction à l'instruction d'activation.

11. Système de stationnement (301) pour véhicules (501), comprenant un emplacement de stationnement (303) **caractérisé par** le système (201) selon l'une des revendications 8 à 10.

12. Programme informatique, comprenant un code de programme pour mettre en œuvre le procédé selon l'une des revendications 1 à 7 lorsque le programme informatique est exécuté sur un ordinateur.
